# EUROPÄISCHE PATENTSCHRIFT

(11) **EP 1 013 687 B1**
(45) Veröffentlichungstag und Bekanntmachung des Hinweises auf die Patenterteilung: **13.04.2005**
(21) Anmeldenummer: 98124501.2
(22) Anmeldetag: 22.12.1998
(51) Int. Cl.: C08G 18/64, C08G 18/80, D06M 15/564

(54) **Wässrige Dispersionen für die Textilveredlung**
Aqueous dispersions for textile finishing
Dispersions aqueuses pour l'ennoblissement textile

(43) Veröffentlichungstag der Anmeldung: 28.06.2000
(73) Patentinhaber: Ciba Spezialitätenchemie Pfersee GmbH, 86462 Langweid a.L. (DE)
(72) Erfinder: Dirschl, Franz, Dr., 86153 Augsburg (DE); Mosch, Franz, 86420 Diedorf (DE); Artner, Wilhelm, 86568 Motzenhofen (DE); Schidek, Edeltraud, 86199 Augsburg (DE); Gaugenrieder, Heinz, 86441 Zusmarshausen (DE); Lüdemann, Simpert, 86399 Bobingen (DE); Rössler, Erich, 86391 Stadtbergen-Leitershofen (DE)

(56) Entgegenhaltungen:
- EP-A- 0 545 353
- EP-A- 0 677 539
- US-A- 4 310 646
- US-A- 4 976 833
- US-A- 5 725 789
- PATENT ABSTRACTS OF JAPAN vol. 097, no. 010, 31. Oktober 1997 (1997-10-31) & JP 09 143882 A (MIKI RIKEN KOGYO KK), 3. Juni 1997 (1997-06-03)

## Beschreibung

Die Erfindung betrifft wäßrige Dispersionen, welche eine Verbindung enthalten, die blockierte Isocyanatgruppen im Molekül aufweist, ein Verfahren zur Herstellung solcher Dispersionen sowie die Verwendung dieser Dispersionen zur Behandlung von Fasermaterialien.

Wäßrige Dispersionen, welche Verbindungen mit blockierten Isocyanatgruppen enthalten, sind bekannt und beispielsweise in der EP-A 196 309, der EP-A 262 069, der EP-A 537 578 sowie in der EP-A 872 503 beschrieben. Es ist auch bekannt, bei der öl- und wasserabweisenden Ausrüstung von Fasermaterialien Verbindungen mit blockierten Isocyanatgruppen als Extender in Kombination mit Perfluoralkylreste enthaltenden Polymeren einzusetzen, um deren Effekte zu verstärken. Diese Verwendung ist beispielsweise in der EP-A 196 309, der EP-A 537 578 sowie in der EP-A 872 503 beschrieben.

Die in dem Stand der Technik bekannten wäßrigen Dispersionen, welche Verbindungen mit blockierten Isocyanatgruppen enthalten, weisen den Nachteil auf, daß diese beim Einsatz zusammen mit Perfluoralkylreste enthaltenden Polymeren zur Erzielung einer öl- und wasserabweisenden Ausrüstung auf Cellulose enthaltenden Fasermaterialien bisweilen zu nicht optimalen Effekten führen, vor allem was die Permanenz der Effekte nach Wasch- und Chemischreinigungsprozessen betrifft.

Aufgabe der vorliegenden Erfindung war es daher, wäßrige Dispersionen zur Verfügung zu stellen, welche eine Verbindung enthalten, die blockierte Isocyanatgruppen im Molekül aufweist, die zusammen mit Perfluoralkylreste enthaltenden Polymeren die Erzielung einer öl- und wasserabweisenden Ausrüstung auf Cellulose, insbesondere Baumwolle, enthaltenden Fasermaterialien mit guten und vor allem permanenten Effekten ermöglicht

Die Aufgabe wurde gelöst durch eine wäßrige Dispersion enthaltend mindestens drei Komponenten A), B) und C), wobei Komponente A) eine Verbindung ist, die zwei oder mehr blockierte Isocyanatgruppen im Molekül enthält, dadurch gekennzeichnet, daß Komponente B) ein Produkt ist, das erhältlich ist durch Umsetzung einer Diepoxyverbindung der Formel (I)

G-O-(L-O)_{y}-G (I)

oder eines Gemisches von Verbindungen der Formel (I) mit einem Di- oder Polyamin der Formel (II)

H₂N-(CⱼH₂ⱼNH)_{z}-H (II)

oder einem Gemisch von Verbindungen der Formel (II) in einem solchen Mengenverhältnis, daß das molare Verhältnis der eingesetzten Glycidylreste G zu den H-Atomen der eingesetzten Aminogruppen im Bereich von 2 : 1 bis 1 : 4, vorzugsweise im Bereich von 1 : 1 bis 1 : 2, besonders bevorzugt im Bereich von 1 : 1 bis 1 : 1,1 liegt,
und anschließender Umsetzung des erhaltenen Reaktionsproduktes mit einer Säure in einem solchen Mengenverhältnis, daß das Verhältnis von Mol Stickstoff zu Äquivalenten Säure im Bereich von 1 : 0,25 bis 1 : 2 liegt,
wobei die angegebenen Reste und Indizes unabhängig voneinander folgendes bedeuten :
G = Glycidylrest (2,3-Epoxy-1-propylrest)
L = zweiwertiger Rest der Formel (CO)_{c¹} - E_{d} - (CO)_{c²}
E = zweiwertiger aromatischer, aliphatischer oder araliphatischer, gegebenenfalls durch ein oder mehrere O-Atome unterbrochener Kohlenwasserstoffrest mit 1-18 C-Atomen, vorzugsweise ein aliphatischer Rest mit 1-8 C-Atomen oder ein aromatischer Rest mit 6-24 C-Atomen c¹ und c² sind unabhängig voneinander = 0 oder 1
d = 0 oder 1
   wobei c¹, c² und d nicht alle gleichzeitig gleich 0 sind, wenn y = 1
j = 0 oder 2-10
y = 0 oder 1
z = 1-3; jedoch für den Fall daß j = 0 ist z = 1.

Die erfindungsgemäßen wäßrigen Dispersionen haben folgende Vorteile :
1. gute mechanische und thermische Stabilität
2. zusammen mit -auch relativ geringen Mengen von - bekannten, für die Textilausrüstung bereits verwendeten, Perfluoralkylreste enthaltenden Polymeren ermöglichen sie die Erzielung einer öl- und wasserabweisenden Ausrüstung auf Cellulose, insbesondere Baumwolle, enthaltenden Fasermaterialien mit guten Effekten mit guter Permanenz nach Wasch- und Chemischreinigungsprozessen
3. gute Laufeigenschaften beim Einsatz in der Textilausrüstung.

Für die erfindungsgemäßen wäßrigen Dispersionen geignete Komponenten A) sind, wie bereits eingangs gesagt, bekannt und beispielsweise, ohne Anspruch auf Vollständigkeit, in den genannten Schriften beschrieben. Geeignet sind blockierte aliphatische, alicyclische oder aromatische Di-, Tri- oder Polyisocyanate. Auch die zur Blockierung von Isocyanatgruppen geeigneten Verbindungen sind dem Fachmann bekannt. Die als Komponente A) geeigneten Verbindungen können beispielsweise auch durch gleichzeitige oder sukzessive Umsetzung von einem oder mehreren Di- oder Polyisocyanaten mit einer oder mehreren Verbindungen mit funktionellen Gruppen, die mit Isocyanatgruppen reagieren, und anschließender Umsetzung der noch freien Isocyanatgruppen mit bekannten Blockierungsmitteln, vorzugsweise mit Ketonoximen - beispielsweise Acetonoxim oder Butanonoxim - oder Gemischen davon, erhalten werden. Weitere in Frage kommende Blockierungsmittel sind in der Literatur beschrieben. Gemeinsam ist allen geeigneten Blockierungsmitteln, daß sie zu reversibler Blockierung der Isocyanatgruppen führen, d. h. daß das Blockierungsmittel bei Raumtemperatur chemisch an die Isocyanatgruppe gebunden ist und bei erhöhten Temperaturen wieder abgespalten wird. Auch wäßrige Dispersionen der Verbindungen A) sind dem Fachmann bekannt

Die in den erfindungsgemäßen wäßrigen Dispersionen enthaltenen Komponenten B) sind als solche auch bekannt. Diese sind erhältlich durch Umsetzung einer Diepoxyverbindung der Formel (I)

G-O-(L-O)_{y}-G (I)

oder eines Gemisches von Verbindungen der Formel (I) mit einem Di- oder Polyamin der Formel (II)

H₂N-(CⱼH₂ⱼNH)_{z}-H (II)

oder einem Gemisch von Verbindungen der Formel (II) in dem genannten Mengenverhältnis unter Kühlung und anschließender Umsetzung des erhaltenen Reaktionsproduktes mit einer Säure in dem genannten Mengenverhältnis, wobei die angegebenen Reste und Indizes die genannte Bedeutung haben. Bevorzugt sind Verbindungen B), bei denen die eingesetzte Diepoxyverbindung der Formel G-O-E-O-G entspricht, besonders bevorzugt solche, bei denen E ein zweiwertiger aliphatischer Rest mit 2-6 C-Atomen oder ein zweiwertiger aromatischer Rest mit 6-18 C-Atomen, insbesondere der Rest p - C₆H₄ - (CH₃)C(CH₃) - p - C₆H₄ - ist. Desgleichen bevorzugt sind Verbindungen B), bei deren Herstellung ein Diamin mit 2-6 C-Atomen eingesetzt wurde, insbesondere Hexamethylendiamin. Bei der Herstellung der Verbindungen B) wird als Säure bevorzugt entweder eine organische Säure, insbesondere Essigsäure, oder eine starke anorganische Säure, wie Schwefelsäure, Phosphorsäure und vor allem Salzsäure, eingesetzt. Es können jedoch auch andere Säuren verwendet werden. Es ist vorteilhaft, wenn die Zugabe der Säure zügig erfolgt.

Die erfindungsgemäßen Dispersionen können durch gemeinsame Dispergierung der Komponenten A) und B) bei gleichzeitigem Einsatz der Komponente C) hergestellt werden, beispielsweise mit Hilfe eines Hochgeschwindigkeitsrührers, besonders bevorzugt sind solche, die nach der Dispergierung durch Homogenisierung in feinteilige Dispersionen überführt werden. Die Homogenisierung kann beispielsweise mit einer Hochdruckhomogenisiermaschine (z. B. Hersteller Manton-Gaulin) bei einem Druck von 100 bis 500 bar, vorzugsweise 200 bis 300 bar durchgeführt werden. Die Komponenten A) werden, wenn sie für sich allein dispergiert werden, oder bei der genannten bevorzugten gemeinsamen Dispergierung vorzugsweise als Lösungen in organischen Lösungsmitteln eingesetzt. Als Lösungsmittel eignen sich beispielsweise Ester, Ketone, Alkohole, aromatische Kohlenwasserstoffe, Mono-, Di-, Tri- und Tetraglykole von Ethylen- oder Propylenglykol sowie deren Alkyl-ether oder deren Ester. Sowohl Dispergierung und ggf. Mischung als auch Hochdruckhomogenisierung können bei normaler oder erhöhter Temperatur durchgeführt werden. Zu tiefe Temperaturen bergen die Gefahr einer Produktausfällung aus der Dispersion, die Temperatur-obergrenze wird durch den Siedepunkt des Gemischs Wasser/Lösungsmittel bestimmt. Vorzugsweise wird bei 20-40°C gearbeitet, die Hochdruckhomogenisierung zweckmäßigerweise unter Kühlung durchgeführt. Nach dem Erhalt der Dispersion enthaltend Komponente A) und B) wird vorzugsweise ein gegebenenfalls anwesendes organisches Lösungsmittel entfernt, beispielsweise durch Destillation, gegebenenfalls unter Vakuum. Die so erhaltenen lösungsmittelfreien wäßrigen Dispersionen weisen neben den Vorteilen der Umweltfreundlichkeit und eines erhöhten Flammpunkts auch den einer erhöhten Stabilität auf.

Die erfindungsgemäßen Dispersionen enthalten die Komponenten A) und B) vorteilhafterweise in einem Gewichtsverhältnis von 100 : 2,5 bis 100 : 30, vorzugsweise von 100 : 5 bis 100 : 15. Ihr Wassergehalt ist in breiten Grenzen variierbar und richtet sich nach Herstellungsbedingungen, Stabilitätsanforderungen und der vorgesehenen Art ihrer Verwendung.

Die erfindungsgemäßen Dispersionen enthalten als Komponente C) einen oder mehrere Dispergatoren. Gut geeignet sind nichtionische oder kationische Dispergatoren, beispielsweise Alkoxylate von Fettalkoholen, Fettsäuren und Sorbitanestern, Alkylpolyglykoside, alkoxylierte und ggf. quatemisierte Amine, Tetraalkylammoniumsalze. Besonders geeignet sind kationische oder pseudokationische Dispergatoren der Formel (III) oder (IV)

[R⁴ ₐR⁵ _{b}NR⁶ _{(4-a-b)}]ₚX (III)

R⁴R⁵N-CₖH₂ₖ-NR⁴ ₂ (IV)

wobei die angegebenen Reste und Indizes unabhängig voneinander folgendes bedeuten :
R⁴ = (CₘH₂ₘO)ₜ-R³
R³ = H oder lineare oder verzweigte Alkylgruppe mit 1-6 C-Atomen
R⁵ = linearer Alkyl- oder Alkenylrest mit 8-24 C-Atomen
R⁶ = H, Methyl oder Ethyl
a = 0, 1 oder 2
b = 1 oder 2
k = 2-6
m = 2-4
p = Wertigkeit von X
t = 1-20, vorzugsweise 5-10
X = Anion, vorzugsweise R¹COO⁻, CH₃SO₄⁻, SO₄²⁻, Halogenidion, besonders Cl⁻.

Die erfindungsgemäßen Dispersionen enthalten die Komponenten A) und C) vorteilhafterweise in einem Gewichtsvehältnis von 100 : 1 bis 100 : 20, vorzugsweise von 100 : 1 bis 100 : 5.

Die erfindungsgemäßen Dispersionen enthalten neben den Komponenten A), B) und C) vorzugsweise zusätzlich als Komponente D) ein Perfluoralkylreste enthaltendes Oligomer, Homo- oder Copolymer. Perfluoralkylreste enthaltende Oligo-, Homo- oder Copolymere sind dem Fachmann bekannt Genannt seien beispielsweise Perfluoralkylgruppen enthaltende Acrylpolymere und Polyurethane. Als Perfluoralkylreste enthaltende Copolymere geeignet sind auch solche, die aus zwei oder mehr, zum Teil auch fluorfreien, Monomeren aufgebaut sind. Vorzugsweise geeignet sind Oligo-, Homo- oder Copolymere auf Basis von Acrylaten oder Methacrylaten mit Perfluoralkylgruppen. Gut geeignet sind beispielsweise Copolymere, die aus Perfluoralkylethylacrylat, Vinylidenchlorid und Stearylmethacrylat, mit einem Gewichtsverhältnis der Monomeren von etwa 4 : 1 : 1, aufgebaut sind.

Erfindungsgemäße Dispersionen enthaltend die Komponenten A), B), C) und D) werden bevorzugt durch Mischen einer Dispersion, enthaltend die Komponenten A) und B) und C), mit einer Dispersion, enthaltend Komponente D) und C) sowie weitere Komponenten, hergestellt Komponente B) kann auch bei der Herstellung der Dispersion von Komponente D), zusammen mit Komponente C), eingesetzt werden. Dispersionen, die durch Mischen einer fluorfreien wäßrigen Dispersion enthaltend die Komponenten A), B) und C) mit einer wäßrigen Dispersion enthaltend die Komponenten B), D) sowie C) erhalten werden, sind ebenfalls gut als erfindungsgemäße Dispersionen geeignet.

Als Komponente D) vorzugsweise geeignet ist ein Perfluoralkylgruppen enthaltendes Copolymer, aufgebaut im wesentlichen aus einem Monomeren a) :
a) 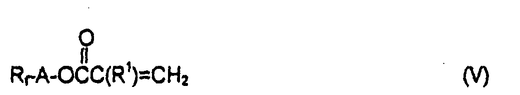 und einem oder mehr der Monomeren b) und c):
b) 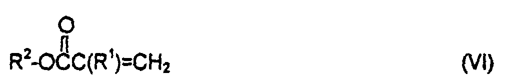
c) 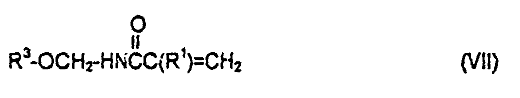
wobei die angegebenen Reste und Indizes unabhängig voneinander folgendes bedeuten
A = linearer oder verzweigter zweiwertiger Rest der Formel -CₙH₂ₙ-, -CₙH₂ₙ₋₂- oder -S(O₂)-NR³-CₘH₂ₘ- wobei das S-Atom an R_{f} gebunden ist
R_{f} = Perfluoralkylrest mit 4-20 C-Atomen
R¹ = H oder Methyl
R² = linearer Alkyl- oder Alkenylrest mit 1-24, vorzugsweise 4-24 C-Atomen
R³ = H oder vorzugsweise lineare oder verzweigte Alkylgruppe mit 1-6 C-Atomen
m = 2-4
n = 1-4.

Bei den Monomeren der Formel (V) kann es sich auch um Gemische mit unterschiedlichen Resten R_{f} handeln. Bevorzugt sind die Monomere in einem Gewichtsverhältnis (V) : (VI) : (VII) von 20-99 % : 1-30 % : 0-20 % enthalten.

Die erfindungsgemäßen Dispersionen enthalten die Komponenten A) und D) vorteilhafterweise in einem Gewichtsverhältnis von 100 : 40 bis 100 : 1500, vorzugsweise von 100 : 80 bis 100 : 250.

Die erfindungsgemäßen Dispersionen eignen sich sehr gut zur Behandlung von Fasermaterialien, besonders für die Behandlung von gewebten oder gewirkten textilen Flächengebilden. Geeignet sind sowohl Fasermaterialien aus nativer wie auch regenerierter Cellulose, vorzugsweise Baumwolle, sowie auch Fasern tierischen Ursprungs, vorzugsweise Wolle, und auch Fasermaterialien aus synthetischen organischen Fasern, wie beispielsweise Polyesterfasern, sowie auch Gemische davon. Gegebenenfalls können zusätzlich weitere zur Textilveredlung geeignete Produkte wie beispielsweise Cellulosevemetzer, Weichgriffmittel, Silikonelastomere oder Flammschutzmittel eingesetzt werden, vorzugsweise indem man diese Produkte den erfindungsgemäßen Dispersionen zusetzt. Geeignete hierfür zusätzlich einzusetzende Produkte sind dem Fachmann bekannt. Als Beispiele seien angeführt : Ethylenharnstoffderivate als Cellulosevernetzer, Silikon und/oder modifiziertes Polyethylen enthaltende Dispersionen als Weichgriffmittel, Phosphor enthaltende Produkte für die Flammschutzausrustung. Die erfindungsgemäßen Zusammensetzungen enthaltend die Komponenten A), B), C) und D) eignen sich vorzugsweise zum Einsatz zur öl-, wasser- und schmutzabweisenden Ausrüstung von Fasermaterialien. Die mit den erfindungsgemäßen Dispersionen ausgerüsteten Fasermaterialien weisen gute öl-, wasser- und schmutzabweisende Effekte mit guter Permanenz der Effekte nach Wasch- und Chemisch-Reinigungsvorgängen auf, wobei die Effekte in einer Reihe von Fällen durch Bügeln der Fasermaterialien nach den Wasch- und Chemisch-Reinigungsvorgängen noch verbessert werden können.

Das Aufbringen der erfindungsgemäßen Dispersionen auf Fasermaterialien kann mit den üblichen, dem Fachmann bekannten Methoder., wie Foulardieren, Beschichten, Sprühen, Pflatschen, Ausziehverfahren usw. geschehen. Besonders bevorzugt ist das Aufbringen mittels Foulard. Die zweckmäßigerweise einzustellenden Konzentrationen können vom Fachmann einfach ermittelt werden. Die so behandelten Fasermaterialien werden in der üblichen Weise, z. B. durch Trocknen, fertiggestellt.

Die Erfindung wird im weiteren durch Anwendungsbeispiele veranschaulicht. Bei allen Beispielen wurden gleiche Baumwollköper verwendet. Bei der Beurteilung der Ergebnisse wurden die nachfolgend beschriebenen Testmethoden angewandt. Vor Durchführung der Tests wurden die Gewebeproben nach der Ausrüstung 24 Stunden bei 20°C/65 % rel. Feuchte gelagert.

Die ölabweisende Wirkung wurde nach AATCC 118-1997 bestimmt Hierbei wurde die Benetzung durch 8 verschiedene flüssige Kohlenwasserstoffe geprüft; die Bewertungsskala dieser Testmethode umfaßt Noten von 1 bis 8, wovon Note 8 die beste (höchster Abweisungseffekt) ist.

Die wasserabweisende Wirkung wurde sowohl nach AATCC 22-1996 (sog. Spraytest) als auch nach DIN 53888 (sogenannter Bundesmann-Beregnungstest) durchgeführt. Bei diesem letzteren Test wird der sog. "Abperleffekt" visuell beurteilt (für jedes Gewebe dreimal, und zwar nach 1, 5 und 10 Minuten Beregnungszeit), wobei Noten von 1 (schlechteste Note) bis 5 (beste Note : Wasser perlt ohne Benetzung ab) vergeben werden und anschließend die Wasseraufnahme in Gew.-% bestimmt. Beim Spraytest wird ebenfalls die Benetzung visuell beurteilt, die Notenskala reicht von 0 bis 100 (100 = beste Note, d.h. geringste Benetzung). Die obengenannten AATCC-Testmethoden sind dem "AATCC (American Association of Textile Chemists and Colorists) Technical Manual" Vol 73, 1998, Seiten 62-63 und 186-188 entnommen.

### Beispiele 1 bis 4 (nicht erfindungsgemäß)

### Herstellung einer Dispersion von Komponente A1

In einem Vierhalskolben von 2l, ausgestattet mit Rührer, Thermometer und Rückflußkühler wurden 225 g eines handelsüblichen Polyisocyanats auf Basis eines Umsetzungsproduktes aus Trimethylolpropan und Toluoldiisocyanat (75 %-ige Lösung in Ethylacetat), in 399 g Methylisobutylketon bei Zimmertemperatur gelöst. Unter Rühren wurden der Lösung innerhalb 10 Minuten 63,75 g Butanonoxim zugegeben. Hierbei stieg die Temperatur von 24 auf etwa 50°C. Die Mischung wurde für 15 Minuten weitergerührt, danach eine Prüfung auf freie NCO-Gruppen durchgeführt, die negativ ausfiel. In einem Becherglas wurden 834 g Leitungswasser, 60 g Propylenglykol, 23,25 g eines handelsüblichen quartären Ammoniumchlorids (Polyoxyethylenstearylmethylammoniumchlorid) und 23,25 g MARLOWET 5401 (Acetat eines Alkyloxyalkylaminethoxylats, Firma Condea Chemie) homogenisiert. In diese wäßrige Emulgatorlösung wurde die im Vierhalskolben erhaltene organische Phase eingerührt. Mit Hilfe eines Schnellrührgerätes (Ultra-Turrax) wurde in etwa 5 Minuten durch Rühren eine Voremulsion hergestellt. Der pH-Wert der erhaltenen Mischung betrug 5,2. Dieser wurde durch Zugabe von 13,81 g konzentrierter (etwa 31 %-iger) Salzsäure auf 2,5 eingestellt. Die Mischung wurde anschließend in vier Passagen über eine Hochdruckhomogenisiermaschine (Hersteller Manton-Gaulin) bei etwa 300 bar Arbeitsdruck homogenisiert. Die Anfangstemperatur der Mischung betrug 24°C, die Endtemperatur der nach der vierten Passage erhaltenen Dispersion betrug 35°C. Erhalten wurde eine weiße, viskose Dispersion.

Anschließend wurden aus 1000 g der erhaltenen Dispersion in einem Rotationsverdampfer bei 70°C Badtemperatur unter Vakuum (270 mbar absoluter Druck) die Lösungsmittel zusammen mit einem Teil des Wassers abdestilliert. Erhalten wurden 698 g einer wäßrigen Dispersion mit einer Trockensubstanz von 24,9 Gew.-%, die durch Zugabe von Wasser auf 22,5 Gew.-% eingestellt wurde. Die erhaltene Dispersion wies eine gute Stabilität gegenüber mechanischen und thermischen Einflüssen auf.

### Herstellung einer Dispersion von Komponente D4

In einem Becherglas wurden 30 g des in den Beispielen 1-4 genannten quartären Ammoniumchlorids, 200 g Dipropylenglykol, 480 g Leitungswasser, 480 g eines handelsüblichen Perfluoralkylethylacrylats (Perfluoralkylreste mit 6-12 C-Atomen), 120 g Stearylmethacrylat, 4,8 g n-Dodecylmercaptan (Kettenlängenregler) und 20 g N-(Butoxymethyl)methacrylamid auf 45'C erwärmt, mit einem Rührer (Turrax) für 2 Minuten einturbiniert, anschließend wurde der pH-Wert von 7,2 mit 0,6 g 31 %-iger Salzsäure auf 2,8 eingestellt. Erhalten wurde eine opaleszente bis trübe, gute Voremulsion. Die erhaltene Dispersion wurde in einen Autoklaven überführt.

In einem Becherglas wurden 6,4 g Azo-Starter V50 (2,2'-Azobis(2-amidinopropan)dihydrochlorid, Firma Transol) bei Zimmertemperatur in 57,6 g Leitungswasser gelöst und in den Autoklaven zugegeben. Um den Sauerstoff aus dem Autoklaven zu entfernen wurde dieser siebenmal durch Ansetzen von Vakuum und Entspannen mit Stickstoff völlig entlüftet. Der verschlossene Autoklav wurde mit einer auf 76°C eingestellten Badheizung erwärmt, die Reaktionsmasse mit 200 U/min umgerührt. Die anfangs milchige Dispersion wurde nach etwa einer halben Stunde durchscheinender Dabei stieg der Überdruck im Autoklaven von anfangs 0 auf 0,5 bar und die Innentemperatur auf 68°C nach einer Stunde. Die Reaktionsmasse wurde weitere sieben Stunden unter Erwärmen umgerührt, wobei sich das Aussehen der Dispersion nicht mehr veränderte, der Überdruck im Autoklaven aber bis auf 1,8 bar stieg. Erhalten wurden 1360 g einer leicht durchscheinenden Dispersion mit einer Trockensubstanz von 45,4 % was bei einem Gehalt von 43 % Fluor in der Trockensubstanz einem Gehalt von 19,5% Fluor in der Dispersion entspricht.

In analoger Weise können Dispersionen der Komponenten D1 bis D3 hergestellt werden.

Vier Flotten wurden angesetzt mit folgenden Komponenten:

| | |
|---|---|
| 2 g/l | Essigsäure 60 Gew.-% |
| 20 g/l | KNITTEX FLC |
| 6 g/l | KNITTEX Katalysator MO |
| 10 g/l | der Dispersion der Komponente A1 Komponente D (Menge siehe unten) |

KNITTEX FLC (Firma Ciba Spezialitätenchemie Pfersee) ist ein Cellulosevernetzer auf Basis von verethertem Dimethyloldihydroxyethylenhamstoff, KNITTEX Katalysator MO (Firma Ciba Spezialitätenchemie Pfersee) ist ein Vernetzungskatalysator. Beide letzteren Produkte wurden den Flotten hinzugefügt, um den Geweben verbesserte Knittereigenschaften zu gewähren. Außer den oben mengenmäßig genannten Komponenten wurde jeder der Flotten 1-4 eine bestimmte Menge einer wäßrigen, mindestens einen Emulgator und ggf. weitere Hilfsstoffe enthaltenden Dispersion eines Copolymers, das Fluor enthält (Komponente D), zugegeben, so daß jede Flotte 1,2 g Fluor/l enthielt. Folgende Komponenten D wurden zugegeben:

| Beispiel (Flotte) | Komponente D) | Copolymer | Fluorgehalt Dispersion | Menge Dispersion |
|---|---|---|---|---|
| 1 | D1 | Copolymer aus Perfluoralkylethylacrylat, Vinylidenchlorid und Stearylmethacrylat, acetonhaltig | 6 % | 20 g/l |
| 2 | D2 | Copolymer aus Perfluoralkylethylacrylat, Vinylidenchlorid und Stearylmethacrylat | 6 % | 20 g/l |
| 3 | D3 | Copolymer aus Perfluoralkylethylacrylat, Vinylidenchlorid und Stearylmethacrylat | 20 % | 6 g/l |
| 4 | D4 | Copolymer aus Perfluoralkylethylacrylat, Stearylmethacrylat und N-Butoxymethylmethacrylamid | 19,5 % | 6,15 g/l |

Die so erhaltenen Ausrüstungsflotten wurden bei Raumtemperatur mittels Foulard auf blaue Baumwollköper mit einer Flottenaufnahme von etwa 100 Gew.-%, bezogen auf das Warengewicht, aufgebracht. Die Gewebe wurden dann für 10 Minuten bei 110°C in einem Trockenschrank getrocknet und anschließend für 5 Minuten bei 150°C kondensiert. Die Gewebe wurden nach den Wäschen bzw. nach dem Chemisch-Reinigen gebügelt. Die in den Beispielen 1 bis 4 ausgerüsteten Baumwollgewebe weisen die in Tabelle 1 angeführten Testergebnisse auf.

Die Dispersionen der Beispiele 1-4 unterscheiden sich von den erfindungsgemäßen Dispersionen dadurch, daß zwar eine Komponente A) anwesend war, aber keine Komponente B).

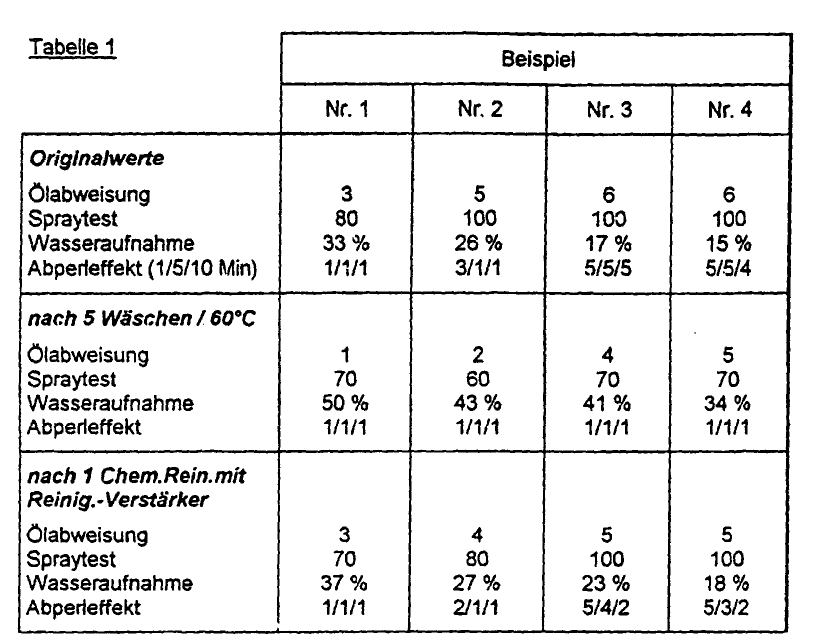

### Beispiele 5 bis 8 (erfindungsgemäß)

### Herstellung der Komponente B1 (wäßrige Lösung)

88 g ARALDIT® GY 266 (Bisphenol A - Diglycidylether, Firma Ciba Specialty Chemicals Inc.) wurden in einen 1-l Dreihalskolben eingeführt und anschließend der Kolben durch Anlegen eines Vakuums inertisiert und mit Stickstoff entlastet. Sodann wurden 235,6 g Isopropanol zugefügt und die Mischung unter Rühren auf 29°C gebracht. Desweiteren wurden langsam 31,5 g 90%-iges, geschmolzenes Hexamethylendiamin der Mischung unter Rühren zugegeben, wobei durch Kühlung mit einem Eisbad darauf geachtet wurde, daß die Innentemperatur 35°C nicht überstieg. Nachdem alles Hexamethylendiamin zugegeben war, wurde solange weitergerührt, bis die Lösung ein opaleszentes, blaustichiges Aussehen hatte. Unter weiterem Rühren wurden 26 g 60%-ige Essigsäure in einem Zug hinzugegeben und das Ganze mit 520 g Wasser verdünnt. Die Zusammensetzung wurde auf 45°C erwärmt und unter Wasserstrahlpumpenvakuum unter langsamer Erhöhung der Temperatur bis auf 55°C wurden 356,3 g Isopropanol/Wasser abdestilliert. Nach Abkühlen auf 30°C betrug der pH-Wert 8,5, die Dichte lag bei 1,037 g/ccm. Erhalten wurde eine blaustichige, dünnflüssige, wäßrige Lösung mit einem Gehalt von etwa 25% an Komponente B1.

### Herstellung einer Dispersion von Komponente A1 und Komponente B1

In einem Vierhalskolben von 2l, ausgestattet mit Rührer, Thermometer und Rückflußkühler wurden 225 g eines handelsüblichen Polyisocyanats auf Basis eines Umsetzungsproduktes aus Trimethylolpropan und Toluoldiisocyanat (75 %-ige Lösung in Ethylacetat) in 399 g Methylisobutylketon bei Zimmertemperatur gelöst. Unter Rühren wurden der Lösung innerhalb 10 Minuten 63,75 g Butanonoxim zugegeben. Hierbei stieg die Temperatur von 24 auf etwa 50°C. Die Mischung wurde für 15 Minuten weitergerührt, danach eine Prüfung auf freie NCO-Gruppen durchgeführt, die negativ ausfiel. In einem Becherglas wurden 834 g Leitungswasser, 60 g Propylenglykol, 6 g des in den Beispielen 1-4 genannten quartären Ammoniumchlorids und 115,5 g der wäßrigen Lösung der Komponente B1 homogenisiert. In diese wäßrige Emulgatorlösung wurde die im Vierhalskolben erhaltene, blockiertes Polyisocyanat enthaltende, organische Phase eingerührt. Mit Hilfe eines Schnellrührgerätes (Ultra-Turrax) wurde in etwa 5 Minuten durch Rühren eine Voremulsion hergestellt. Der pH-Wert der erhaltenen Mischung betrug 5,2. Dieser wurde durch Zugabe von 13,81 g konzentrierter (etwa 31 %-iger) Salzsäure auf 2,5 eingestellt. Die Mischung wurde anschließend in vier Passagen über eine Hochdruckhomogenisiermaschine (Hersteller Manton-Gaulin) bei etwa 300 bar Arbeitsdruck homogenisiert. Die Anfangstemperatur der Mischung betrug 24°C, die Endtemperatur der nach der vierten Passage erhaltenen Dispersion betrug 35°C. Erhalten wurde eine weiße, viskose Dispersion.

Anschließend wurden aus 1000 g der erhaltenen Dispersion in einem Rotationsverdampfer bei 70°C Badtemperatur unter Vakuum (270 mbar absoluter Druck) die Lösungsmittel zusammen mit einem Teil des Wassers abdestilliert. Erhalten wurden 648 g einer wäßrigen Dispersion mit einer Trockensubstanz von 26,8 Gew.-%, die durch Zugabe von Wasser auf 22,5 Gew.-% eingestellt wurde. Die erhaltene Dispersion wies eine gute Stabilität gegenüber mechanischen und thermischen Einflüssen auf.

Vier Flotten wurden angesetzt mit folgenden Komponenten:

| | |
|---|---|
| 2 g/l | Essigsäure 60 Gew.-% |
| 20 g/l | KNITTEX FLC |
| 6 g/l | KNITTEX Katalysator MO |
| 10 g/l | der Dispersion der Komponente A1 und der Komponente B1 Komponente D (Menge siehe unten) |

Außer den oben mengenmäßig genannten Komponenten wurde wie in den Beispielen 1-4 jeder Flotte eine bestimmte Menge einer wäßrigen, mindestens einen Emulgator und ggf. weitere Hilfsstoffe enthaltenden Dispersion eines Copolymers, das Fluor enthält (Komponente D), zugegeben, so daß jede Flotte 1,2 g Fluor/l enthielt. Folgende (auch in den Beispielen 1-4 eingesetzten) Komponenten D wurden zugegeben:

| Beispiel (Flotte) | Komponente D | Fluorgehalt in Dispersion | Menge Dispersion |
|---|---|---|---|
| 5 | D1 | 6% | 20 g/l |
| 6 | D2 | 6% | 20 g/l |
| 7 | D3 | 20 % | 6 g/l |
| 8 | D4 | 19,5 % | 6,15 g/l |

Die so erhaltenen Ausrüstungsflotten wurden bei Raumtemperatur mittels Foulard auf blaue Baumwollköper mit einer Flottenaufnahme von etwa 100 Gew.-%, bezogen auf das Warengewicht, aufgebracht Die Gewebe wurden dann für 10 Minuten bei 110°C in einem Trockenschrank getrocknet und anschließend für 5 Minuten bei 150°C kondensiert. Die Gewebe wurden nach den Wäschen bzw. nach dem Chemisch-Reinigen gebügelt. Die in den Beispielen 5 bis 8 ausgerüsteten Baumwollgewebe weisen die in Tabelle 2 angeführten Testergebnisse auf.

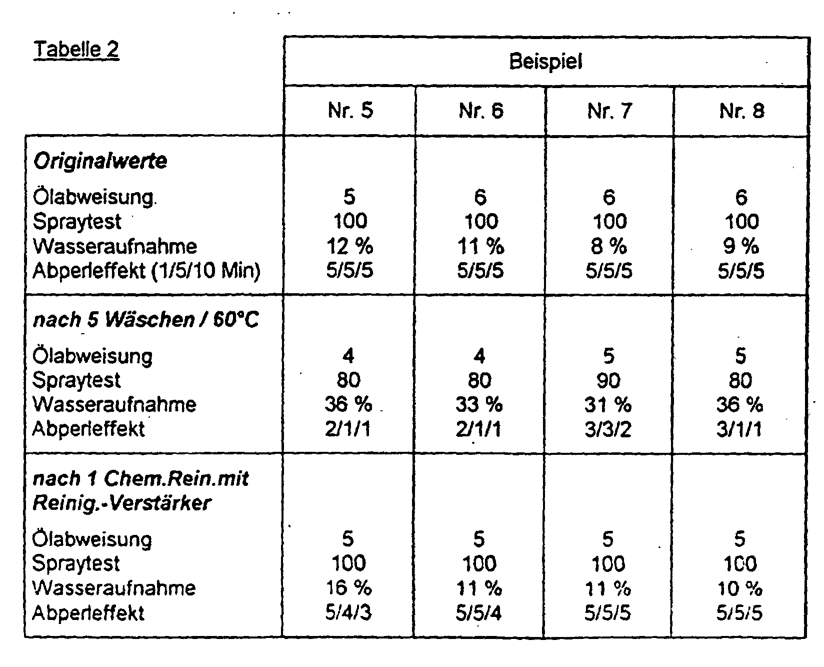

Beim Vergleich der erfindungsgermäßen Beispiele 5-8 mit den nicht erfindungsgemäßen Beispielen 1-4 erkennt man, daß die erhaltenen Werte für Beispiele 5-8 eindeutig besser sind, sowohl für die ausgerüsteten Stoffe als solche als auch für die gewaschenen oder chemisch gereinigten Stoffe.

### Beispiele 9 bis 12 (nicht erfindungsgemäß)

### Herstellung einer Dispersion von Komponente A2

187,5 g eines handelsüblichen, cycloaliphatischen, mit Acetonoxim blockierten Polyisocyanats (60 %-ige Lösung in Xylol/Butylacetat), wurden in 93,75 g Methylisobutylketon gelöst. In einem Becherglas wurden 370 g entmineralisiertes Wasser, 29 g Propylenglykol und 19 g des in den Beispielen 1-4 genannten quartären Ammoniumchlorids homogenisiert. In diese wäßrige Emulgatorlösung wurde die Lösung des blockierten Polyisocyanats eingerührt. Mit Hilfe eines Schnellrührgerätes (Ultra-Turrax) wurde eine Voremulsion hergestellt. Der pH-Wert der erhaltenen Mischung betrug 7,5. Dieser wurde durch Zugabe von 0,8 g konzentrierter (etwa 31 %-iger) Salzsäure auf 2,5 eingestellt. Die Mischung wurde anschließend in vier Passagen über eine Hochdruckhomogenisiermaschine (Hersteller Manton-Gaulin) bei etwa 300 bar Arbeitsdruck homogenisiert. Die Anfangstemperatur der Mischung betrug 25°C, die Endtemperatur der nach der vierten Passage erhaltenen Dispersion betrug 36°C. Erhalten wurden 664 g Dispersion.

Anschließend wurde die erhaltene Dispersion in einem Dreihalskolben von 1l bei 70°C Badtemperatur unter Vakuum (370 -200 mbar absoluter Druck) für 40 Minuten einer Destillation unterworfen, wobei die Lösungsmittel zusammen mit einem Teil des Wassers abdestilliert wurden. Erhalten wurden 452 g einer wäßrigen Dispersion mit einer Trockensubstanz von 27,1 Gew.-%, die durch Zugabe von Wasser auf 22,5 Gew.-% eingestellt wurde. Die erhaltene Dispersion wies eine gute Stabilität gegenüber mechanischen und thermischen Einflüssen auf.

Vier Flotten wurden angesetzt mit folgenden Komponenten :

| | |
|---|---|
| 2 g/l | Essigsäure 60 Gew.-% |
| 20 g/l | KNITTEX FLC |
| 6 g/l | KNITTEX Katalysator MO |
| 10 g/l | der Dispersion der Komponente A2 Komponente D (Menge siehe unten) |

Außer den oben mengenmäßig genannten Komponenten wurde jeder Flotte eine bestimmte Menge einer wäßrigen, mindestens einen Emulgator und ggf. weitere Hilfsstoffe enthaltenden Dispersion eines Copolymers, das Fluor enthält (Komponente D), zugegeben, so daß jede Flotte 1,2 g Fluor/l enthielt. Folgende (auch in den Beispielen 1-4 eingesetzten) Komponenten D wurden zugegeben:

| Beispiel (Flotte) | Komponente D | Fluorgehalt in Dispersion | Menge Dispersion |
|---|---|---|---|
| 9 | D1 | 6 % | 20 g/l |
| 10 | D2 | 6 % | 20 g/l |
| 11 | D3 | 20 % | 6 g/l |
| 12 | D4 | 19,5 % | 6,15 g/l |

Die so erhaltenen Ausrüstungsflotten wurden bei Raumtemperatur mittels Foulard auf blaue Baumwollköper mit einer Flottenaufnahme von etwa 100 Gew.-%, bezogen auf das Warengewicht, aufgebracht. Die Gewebe wurden dann für 10 Minuten bei 110°C in einem Trockenschrank getrocknet und anschließend für 5 Minuten bei 150°C kondensiert. Die Gewebe wurden nach den Wäschen bzw. nach dem Chemisch-Reinigen gebügelt. Die in den Beispielen 9 bis 12 ausgerüsteten Baumwollgewebe weisen die in Tabelle 3 angeführten Testergebnisse auf.

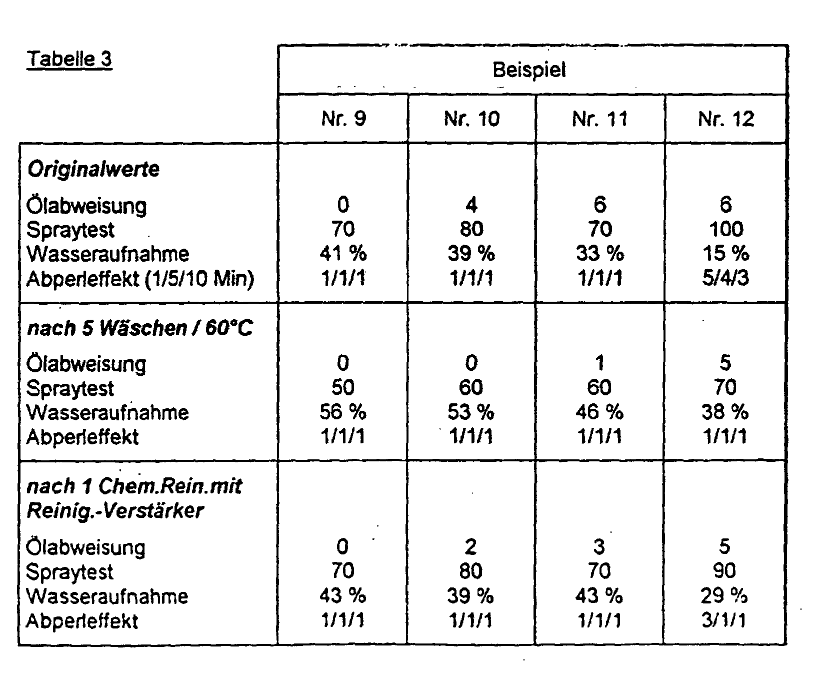

### Beispiele 13 bis 16 (erfindungsgemäß)

### Herstellung einer Dispersion von Komponente A2 und Komponente B1

187,5 g des in den Beispielen 9-12 genannten blockierten Polyisocyanats wurden in 93,75 g Methylisobutylketon gelöst In einem Becherglas wurden 370 g entmineralisiertes Wasser, 29 g Propylenglykol, 55,8 g der wäßrigen Lösung der Komponente B1 hergestellt für die Beispiele 5-8 und 2,9 g des in den Beispielen 1-4 genannten quartären Ammoniumchlorids homogenisiert. In diese wäßrige Emulgatorlösung wurde die Lösung des blockierten Polyisocyanats eingerührt. Mit Hilfe eines Schnellrührgerätes (Ultra-Turrax) wurde eine Voremulsion hergestellt Der pH-Wert der erhaltenen Mischung betrug 7,1. Dieser wurde durch Zugabe von 1,5 g konzentrierter (etwa 31 %-iger) Salzsäure auf 2,5 eingestellt. Die Mischung wurde anschließend in vier Passagen über eine Hochdruckhomogenisiermaschine (Hersteller Manton-Gaulin) bei etwa 300 bar Arbeitsdruck homogenisiert. Die Anfangstemperatur der Mischung betrug 25°C, die Endtemperatur der nach der vierten Passage erhaltenen Dispersion betrug 36°C. Erhalten wurden 694 g Dispersion.

Anschließend wurde die erhaltene Dispersion in einem Dreihalskolben von 1l bei 70°C Badtemperatur unter Vakuum (370 -200 mbar absoluter Druck) für 40 Minuten einer Destillation unterworfen, wobei die Lösungsmittel zusammen mit einem Teil des Wassers abdestilliert wurden. Erhalten wurden 473 g einer wäßrigen Dispersion mit einer Trockensubstanz von 25,7 Gew.-%, die durch Zugabe von Wasser auf 22,5 Gew.-% eingestellt wurde. Die erhaltene Dispersion wies eine gute Stabilität gegenüber mechanischen und thermischen Einflüssen auf.

Vier Flotten wurden angesetzt mit folgenden Komponenten:

| | |
|---|---|
| 2 g/l | Essigsäure 60 Gew.-% |
| 20 g/l | KNITTEX FLC |
| 6 g/l | KNITTEX Katalysator MO |
| 10 g/l | der Dispersion der Komponente A2 und der Komponente B1 Komponente D (Menge siehe unten) |

Außer den oben mengenmäßig genannten Komponenten wurde jeder Flotte eine bestimmte Menge einer wäßrigen, mindestens einen Emulgator und ggf. weitere Hilfsstoffe enthaltenden Dispersion eines Copolymers, das Fluor enthält (Komponente D), zugegeben, so daß jede Flotte 1,2 g Fluor/l enthielt. Folgende (auch in den Beispielen 1-4 eingesetzten) Komponenten D wurden zugegeben:

| Beispiel (Flotte) | Komponente D | Fluorgehalt in Dispersion | Menge Dispersion |
|---|---|---|---|
| 13 | D1 | 6 % | 20 g/l |
| 14 | D2 | 6 % | 20 g/l |
| 15 | D3 | 20 % | 6 g/l |
| 16 | D4 | 19,5 % | 6,15 g/l |

Die so erhaltenen Ausrüstungsflotten wurden bei Raumtemperatur mittels Foulard auf blaue Baumwollköper mit einer Flottenaufnahme von etwa 100 Gew.-%, bezogen auf das Warengewicht, aufgebracht. Die Gewebe wurden dann für 10 Minuten bei 110°C in einem Trockenschrank getrocknet und anschließend für 5 Minuten bei 150°C kondensiert. Die Gewebe wurden nach den Wäschen bzw. nach dem Chemisch-Reinigen gebügelt. Die in den Beispielen 13 bis 16 ausgerüsteten Baumwollgewebe weisen die in Tabelle 4 angeführten Testergebnisse auf.

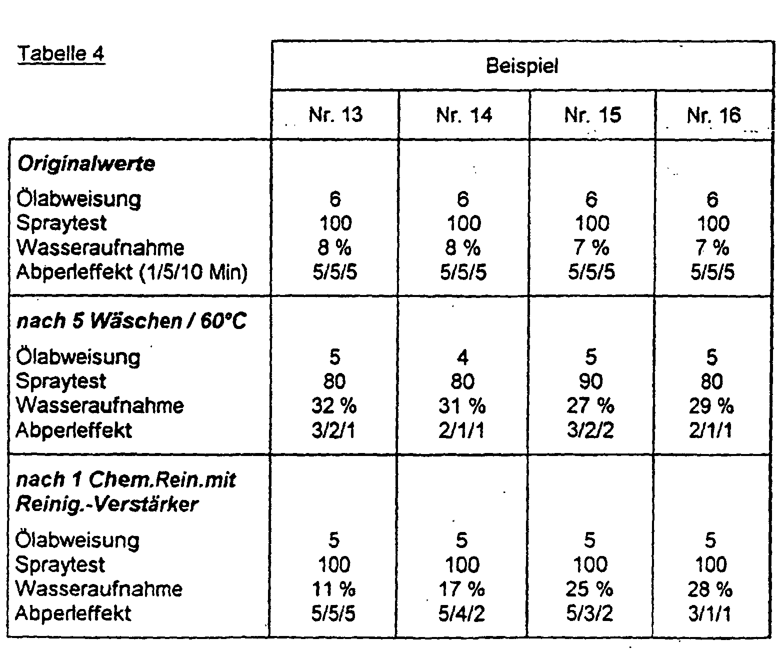

Beim Vergleich der erfindungsgemäßen Beispiele 13-16 mit den nicht erfindungsgemäßen Beispielen 9-12 erkennt man, daß die erhaltenen Werte für Beispiele 13-16 eindeutig besser sind, sowohl für die ausgerüsteten Stoffe als solche als auch für die gewaschenen oder chemisch gereinigten Stoffe.

In den Beispielen 17 bis 23 werden die unterschiedlichen Effekte von nicht erfindungsgemäßen Dispersionen bei Einsatz von unterschiedlichen Komponenten A untersucht Jeder der eingesetzten Flotten wurden 6 g/l einer Dispersion der (auch in den Beispiel 1-4 eingesetzten) Komponente D3 zugegeben, so daß jede Flotte 1,2 g Fluor/l enthielt.

### Beispiel 17 (erfindungsgemäß)

### Herstellung einer Dispersion von Komponente A2 und Komponente B1

Eine Dispersion mit einer Trockensubstanz von 22,5 Gew.-% wie in den Beispielen 13-16 wurde hergestellt.

Eine Flotte wurde angesetzt mit folgenden Komponenten:

| | |
|---|---|
| 2 g/l | Essigsäure 60 Gew.-% |
| 20 g/l | KNITTEX GM konz. |
| 6 g/l | KNITTEX Katalysator MO |
| 10 g/l | der Dispersion der Komponente A2 und der Komponente B1 |
| 6 g/l | Dispersion der Komponente D3 |

KNITTEX GM konz. (Firma Ciba Spezialltätenchemie Pfersee) ist ein Cellulosevernetzer auf Basis von Dimethyloldihydroxyethylenharnstoff und verethertem methyloliertem Melamin.

### Beispiel 18 (nicht erfindungsgemäß)

### Herstellung einer Dispersion von Komponente A2

Eine Dispersion wie in den Beispielen 9-12 wurde hergestellt.

Eine Flotte wurde angesetzt mit folgenden Komponenten :

| | |
|---|---|
| 2 g/l | Essigsäure 60 Gew.-% |
| 20 g/l | KNITTEX GM konz. |
| 6 g/l | KNITTEX Katalysator MO |
| 10 g/l | der Dispersion der Komponente A2 |
| 6 g/l | Dispersion der Komponente D3 |

### Beispiel 19 (erfindungsgemäß)

### Herstellung einer Dispersion von Komponente A3 und Komponente B1

187,5 g eines handelsüblichen cycloaliphatischen, mit Butanonoxim blockierten Polyisocyanats (60 %-ige Lösung in Xylol/Butylacetat) wurden in 93,75 g Methylisobutylketon gelöst. In einem Becherglas wurden 370 g entmineralisiertes Wasser, 29 g Propylenglykol, 55,8 g der wäßrigen Lösung der Komponente B1 hergestellt für die Beispiele 5-8 und 2,9 g des in den Beispielen 1-4 genannten quartären Ammoniumchlorids homogenisiert. In diese wäßrige Emulgatorlösung wurde die Lösung des blockierten Polyisocyanats eingerührt. Mit Hilfe eines Schnellrührgerätes (Ultra-Turrax) wurde eine Voremulsion hergestellt. Der pH-Wert der erhaltenen Mischung betrug 7,2. Dieser wurde durch Zugabe von 6,8 g konzentrierter (etwa 31 %-iger) Salzsäure auf 2,5 eingestellt. Die Mischung wurde anschließend in vier Passagen über eine Hochdruckhomogenisiermaschine (Hersteller Manton-Gaulin) bei etwa 300 bar Arbeitsdruck homogenisiert. Die Anfangstemperatur der Mischung betrug 25°C, die Endtemperatur der nach der vierten Passage erhaltenen Dispersion betrug 36°C. Erhalten wurden 704 g Dispersion.

Anschließend wurde die erhaltene Dispersion in einem Dreihalskolben von 1l bei 70°C Badtemperatur unter Vakuum (370 -200 mbar absoluter Druck) für 40 Minuten einer Destillation unterworfen, wobei die Lösungsmittel zusammen mit einem Teil des Wassers abdestilliert wurden. Erhalten wurden 454 g einer wäßrigen Dispersion mit einer Trockensubstanz von 27,3 Gew.-%, die durch Zugabe von Wasser auf 22,5 Gew.-% eingestellt wurde. Die erhaltene Dispersion wies eine gute Stabilität gegenüber mechanischen und thermischen Einflüssen auf.

Eine Flotte wurde angesetzt mit folgenden Komponenten :

| | |
|---|---|
| 2 g/l | Essigsäure 60 Gew.-% |
| 20 g/l | KNITTEX GM konz. |
| 6 g/l | KNITTEX Katalysator MO |
| 10 g/l | der Dispersion der Komponente A3 und der Komponente B1 |
| 6 g/l | Dispersion der Komponente D3 |

### Beispiel 20 (nicht erfindungsgemäß)

### Herstellung einer Dispersion von Komponente A3

187,5 g des in dem Beispiel 19 genannten cycloaliphatischen, blockierten Polyisocyanats wurden in 93,75 g Methylisobutylketon gelöst. In einem Becherglas wurden 370 g entmineralisiertes Wasser, 29 g Propylenglykol und 19 g des in den Beispielen 1-4 genannten quartären Ammoniumchlorids homogenisiert. In diese wäßrige Emulgatorlösung wurde die Lösung des blockierten Polyisocyanats eingerührt. Mit Hilfe eines Schneitrührgerätes (Ultra-Turrax) wurde eine Voremulsion hergestellt. Der pH-Wert der erhaltenen Mischung betrug 8. Dieser wurde durch Zugabe von 1 g konzentrierter (etwa 31 %-iger) Salzsäure auf 2,5 eingestellt. Die Mischung wurde anschließend in vier Passagen über eine Hochdruckhomogenisiermaschine (Hersteller Manton-Gaulin) bei etwa 300 bar Arbeitsdruck homogenisiert. Die Anfangstemperatur der Mischung betrug 25°C, die Endtemperatur der nach der vierten Passage erhaltenen Dispersion betrug 36°C. Erhalten wurden 680 g Dispersion.

Anschließend wurde die erhaltene Dispersion in einem Dreihalskolben von 1l bei 70°C Badtemperatur unter Vakuum (370 -200 mbar absoluter Druck) für 40 Minuten einer Destillation unterworfen, wobei die Lösungsmittel zusammen mit einem Teil des Wassers abdestilliert wurden. Erhalten wurden 441 g einer wäßrigen Dispersion mit einer Trockensubstanz von 28,5 Gew.-%, die durch Zugabe von Wasser auf 22,5 Gew.-% eingestellt wurde. Die erhaltene Dispersion wies eine gute Stabilität gegenüber mechanischen und thermischen Einflüssen auf.

Eine Flotte wurde angesetzt mit folgenden Komponenten :

| | |
|---|---|
| 2 g/l | Essigsäure 60 Gew.-% |
| 20 g/l | KNITTEX GM konz. |
| 6 g/l | KNITTEX Katalysator MO |
| 10 g/l | der Dispersion der Komponente A3 |
| 6 g/l | Dispersion der Komponente D3 |

### Beispiel 21 (erfindungsgemäß)

### Herstellung einer Dispersion von Komponente A4 und Komponente B1

112,5 g eines handelsüblichen cycloaliphatischen, mit Butanonoxim blockierten Polyisocyanats wurden in 168,8 g Methylisobutylketon gelöst. In einem Becherglas wurden 370 g entmineralisiertes Wasser, 29 g Propylenglykol, 55,8 g der wäßrigen Lösung der Komponente B1 hergestellt für die Beispiele 5-8 und 2,9 g des in den Beispielen 1-4 genannten quartären Ammoniumchlorids homogenisiert. In diese wäßrige Emulgatorlösung wurde die Lösung des blockierten Polyisocyanats eingerührt. Mit Hilfe eines Schnellrührgerätes (Ultra-Turrax) wurde eine Voremulsion hergestellt. Der pH-Wert der erhaltenen Mischung betrug 7,2. Dieser wurde durch Zugabe von 7 g konzentrierter (etwa 31 %-iger) Salzsäure auf 2,5 eingestellt. Die Mischung wurde anschließend in vier Passagen über eine Hochdruckhomogenisiermaschine (Hersteller Manton-Gaulin) bei etwa 300 bar Arbeitsdruck homogenisiert. Die Anfangstemperatur der Mischung betrug 25°C, die Endtemperatur der nach der vierten Passage erhaltenen Dispersion betrug 36°C. Erhalten wurden 687 g Dispersion.

Anschließend wurde die erhaltene Dispersion in einem Dreihalskolben von 1l bei 70°C Badtemperatur unter Vakuum (370 -200 mbar absoluter Druck) für 40 Minuten einer Destillation unterworfen, wobei die Lösungsmittel zusammen mit einem Teil des Wassers abdestilliert wurden. Aufgrund starken Schäumens wurde die Destillation am Schluß bei 250 mbar durchgeführt. Erhalten wurden 437 g einer wäßrigen Dispersion mit einer Trockensubstanz von 26,6 Gew.-%, die durch Zugabe von Wasser auf 22,5 Gew.-% eingestellt wurde. Die erhaltene Dispersion wies eine gute Stabilität gegenüber mechanischen und thermischen Einflüssen auf.

Eine Flotte wurde angesetzt mit folgenden Komponenten :

| | |
|---|---|
| 2 g/l | Essigsäure 60 Gew.-% |
| 20 g/l | KNITTEX GM konz. |
| 6 g/l | KNITTEX Katalysator MO |
| 10 g/l | der Dispersion der Komponente A4 und der Komponente B1 |
| 6 g/l | Dispersion der Komponente D3 |

### Beispiel 22 (nicht erfindungsgemäß)

### Herstellung einer Dispersion von Komponente A4

112,5 g des in dem Beispiel 21 genannten cycloaliphatischen, blockierten Polyisocyanats wurden in 168,8 g Methylisobutylketon gelöst. In einem Becherglas wurden 370 g entmineralisiertes Wasser, 29 g Propylenglykol und 19 g des in den Beispielen 1-4 genannten quartären Ammoniumchlorids homogenisiert. In diese wäßrige Emulgatorlösung wurde die Lösung des blockierten Polyisocyanats eingerührt. Mit Hilfe eines Schnellrührgerätes (Ultra-Turrax) wurde eine Voremulsion hergestellt. Der pH-Wert der erhaltenen Mischung betrug 8,1. Dieser wurde durch Zugabe von 0,7 g konzentrierter (etwa 31 %-iger) Salzsäure auf 2,5 eingestellt. Die Mischung wurde anschließend in vier Passagen über eine Hochdruckhomogenisiermaschine (Hersteller Manton-Gaulin) bei etwa 300 bar Arbeitsdruck homogenisiert. Die Anfangstemperatur der Mischung betrug 25°C, die Endtemperatur der nach der vierten Passage erhaltenen Dispersion betrug 36°C. Erhalten wurden 664 g Dispersion.

Anschließend wurde die erhaltene Dispersion in einem Dreihalskolben von 1l bei 70°C Badtemperatur unter Vakuum (370 -200 mbar absoluter Druck) für 40 Minuten einer Destillation unterworfen, wobei die Lösungsmittel zusammen mit einem Teil des Wassers abdestilliert wurden. Erhalten wurden 430 g einer wäßrigen Dispersion mit einer Trockensubstanz von 26,7 Gew.-%, die durch Zugabe von Wasser auf 22,5 Gew.-% eingestellt wurde. Die erhaltene Dispersion wies eine gute Stabilität gegenüber mechanischen und thermischen Einflüssen auf.

Eine Flotte wurde angesetzt mit folgenden Komponenten :

| | |
|---|---|
| 2 g/l | Essigsäure 60 Gew.-% |
| 20 g/l | KNITTEX GM konz. |
| 6 g/l | KNITTEX Katalysator MO |
| 10 g/l | der Dispersion der Komponente A4 |
| 6 g/l | Dispersion der Komponente D3 |

### Beispiel 23 (erfindungsgemäß)

Herstellung einer Dispersion von Komponente A1 und Komponente B1

Eine Dispersion mit einer Trockensubstanz von 22,5 Gew.-% wie in den Beispielen 5-8 wurde hergestellt.

Eine Flotte wurde angesetzt mit folgenden Komponenten:

| | |
|---|---|
| 2 g/l | Essigsäure 60 Gew.-% |
| 20 g/l | KNITTEX GM konz. |
| 6 g/l | KNITTEX Katalysator MO |
| 10 g/l | der Dispersion der Komponente A1 und der Komponente B1 |
| 6 g/l | Dispersion der Komponente D3 |

Die in den Beispielen 17-23 erhaltenen Ausrüstungsflotten wurden bei Raumtemperatur mittels Foulard auf blaue Baumwollköper mit einer Flottenaufnahme von etwa 100 Gew.-%, bezogen auf das Warengewicht, aufgebracht. Die Gewebe wurden dann für 10 Minuten bei 110°C in einem Trockenschrank getrocknet und anschließend für 5 Minuten bei 150°C kondensiert. Die Gewebe wurden nach den Wäschen bzw. nach dem Chemisch-Reinigen gebügelt. Die in den Beispielen 17 bis 23 ausgerüsteten Baumwollgewebe weisen die in Tabelle 5 angeführten Testergebnisse auf.

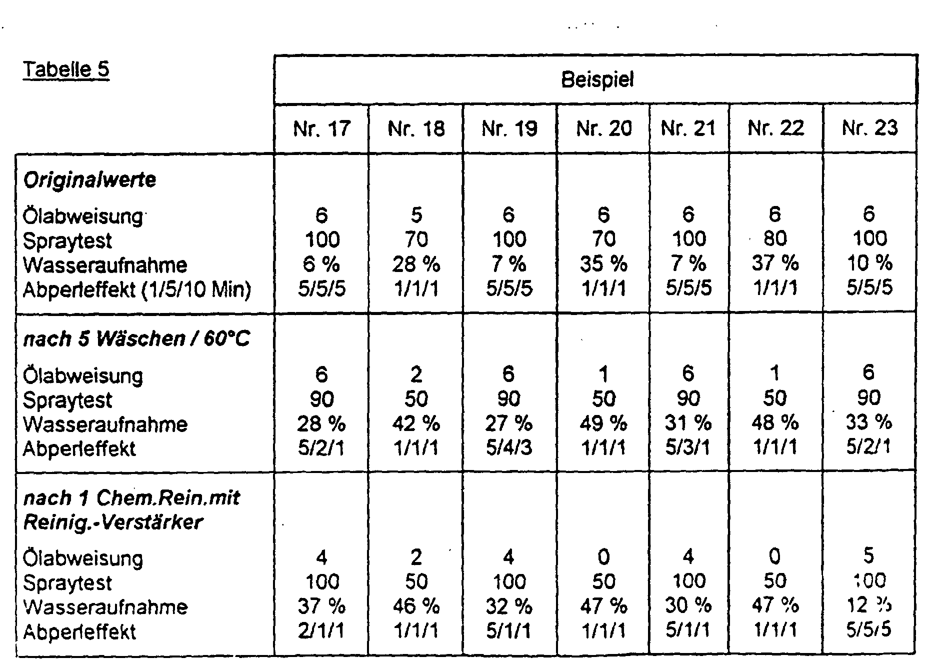

Beim Vergleich der erfindungsgemäßen Beispiele 17, 19, 21, 23 mit den nicht erfindungsgemäßen Beispielen 18, 20, 22 erkennt man, daß die erhaltenen Werte für die erfindungsgemäßen Beispiele eindeutig besser sind, sowohl für die ausgerüsteten Stoffe als solche als auch für die gewaschenen oder chemisch gereinigten Stoffe.

### Beispiele 24-32 (erfindungsgemäß)

In den Beispielen 24-32 wird der Einfluß unterschiedlicher Gewichtsverhältnisse von Fluorcopolymer zu erfindungsgemäßen Zusammensetzungen enthaltend die Komponenten A) und B) untersucht. Neun Flotten wurden ähnlich wie in Beispiel 7 angesetzt mit folgenden Komponenten :

| | |
|---|---|
| 2 g/l | Essigsäure 60 Gew.-% |
| 20 g/l | KNITTEX FLC |
| 6 g/l | KNITTEX Katalysator MO |
| | Dispersion enthaltend die Komponenten A1 und B1 aus den Beispielen 5-8 Komponente D3 |

Folgende Mengen (in g/l Flotte) an Dispersion enthaltend Komponente A1 und Komponente B1 bzw. an Dispersion der (auch in den Beispielen 1-4 eingesetzten) Komponente D3 wurden eingesetzt:

| | Beispiel (Flotte) | | | | | | | | |
|---|---|---|---|---|---|---|---|---|---|
| | 24 | 25 | 26 | 27 | 28 | 29 | 30 | 31 | 32 |
| | | | | | | | | | |
| Komponente D3 | 3 | 3 | 3 | 6 | 6 | 6 | 9 | 9 | 9 |
| Dispersion A1/B1 | 1 | 3 | 6 | 1 | 3 | 6 | 1 | 3 | 6 |

Die so erhaltenen Ausrüstungsflotten wurden bei Raumtemperatur mittels Foulard auf blaue Baumwollköper mit einer Flottenaufnahme von etwa 100 Gew.-%, bezogen auf das Warengewicht, aufgebracht. Die Gewebe wurden dann für 10 Minuten bei 110°C in einem Trockenschrank getrocknet und anschließend für 5 Minuten bei 150°C kondensiert. Die Gewebe wurden nach den Wäschen bzw. nach dem Chemisch-Reinigen gebügelt. Die in den Beispielen 24 bis 32 ausgerüsteten Baumwollgewebe weisen die in Tabelle 6 angeführen Testergebnisse auf.

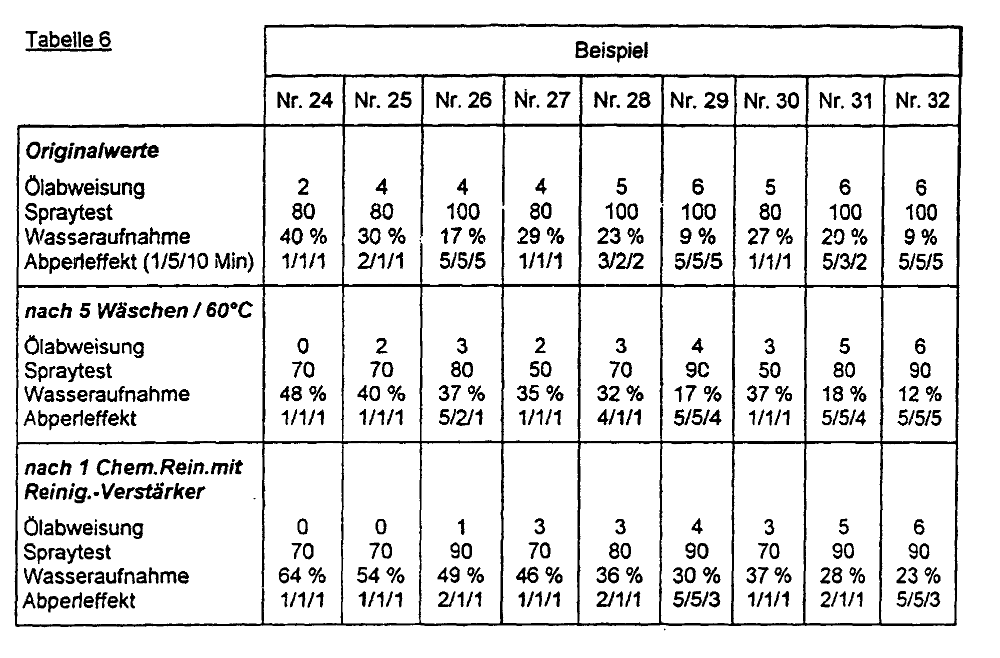

### Beispiele 33-37 (erfindungsgemäß)

In den Beispielen 33-37 wird der Einfluß unterschiedlicher Gewichtsverhältnisse von Komponente A) zu Komponente B) bzw. zu Komponente C) (Dispergator) in den erfindungsgemäßen Zusammensetzungen untersucht.

### Beispiel 33 (erfindungsgemäß)

### Herstellung einer Dispersion von Komponente A1 und Komponente B1

Ähnlich wie in den Beispielen 5-8 wurde ein handelsübliches Polyisocyanat auf Basis eines Umsetzungsproduktes aus Trimethylolpropan und Toluoldiisocyanat (75 %-ige Lösung in Ethylacetat) in Methylisobutylketon gelöst, mit Butanonoxim blockiert, wobei eine Lösung mit einem Gehalt von 33,3% an Komponente A1 erhalten wurde. In einem Becherglas wurde aus 330 g Leitungswasser, 20 g Propylenglykol, 7,5 g des in den Beispielen 1-4 genannten quartären Ammoniumchlorids, 30 g der wäßrigen Lösung der Komponente B1 (hergestellt wie für die Beispiele 5-8) und 300 g der Lösung der Komponente A1 mit Hilfe eines Schnellrührgerätes (Ultra-Turrax) eine Voremulsion hergestellt. Der pH-Wert der erhaltenen Mischung betrug 7,4. Dieser wurde durch Zugabe von 3,7 g konzentrierter (etwa 31 %-iger) Salzsäure auf 2,5 eingestellt. Die Mischung wurde anschließend in vier Passagen über eine Hochdruckhomogenisiermaschine (Hersteller Manton-Gaulin) bei etwa 300 bar Arbeitsdruck homogenisiert. Die Anfangstemperatur der Mischung betrug 25°C, die Endtemperatur der nach der vierten Passage erhaltenen Dispersion betrug 36°C.

Anschließend wurde die erhaltene Dispersion in einem Dreihalskolben von 1l bei 70°C Badtemperatur unter Vakuum (280 -200 mbar absoluter Druck) für 45 Minuten einer Destillation unterworfen, wobei Lösungsmittel zusammen mit einem Teil des Wassers abdestilliert wurde. Erhalten wurden 373 g einer wäßrigen Dispersion mit einer Trockensubstanz von 28,4 Gew.-%, die durch Zugabe von Wasser auf 22,5 Gew.-% eingestellt wurde. Die erhaltene Dispersion wies eine gute Stabilität gegenüber mechanischen und thermischen Einflüssen auf.

### Beispiele 34-37 (erfindungsgemäß)

### Herstellung von Dispersionen von Komponente A1 und Komponente B1

Ähnlich wie für Beispiel 33 wurden Dispersionen hergestellt, allerdings mit unterschiedlichen Mengen (in g) an Komponenten B) und C), und zwar:

| | Beispiel 33 | Beispiel 34 | Beispiel 35 | Beispiel 36 | Beispiel 37 |
|---|---|---|---|---|---|
| | | | | | |
| Lösung Komponente B1 | 30 | 80 | 60 | 50 | 60 |
| in den Beispielen 1-4 genanntes quartäres Ammoniumchlorid | 7,5 | 0 | 0 | 2,5 | 5 |

In den Beispielen 34-37 wurde bei der Herstellung der Dispersionen eine der durch die größere Menge der wäßrigen Lösung der Komponente B1 eingebrachten Wassermenge entsprechende geringere Menge an Leitungswasser eingesetzt.

Fünf Flotten wurden angesetzt mit folgenden Komponenten :

| | |
|---|---|
| 2 g/l | Essigsäure 60 Gew.-% |
| 20 g/l | KNITTEX FLC |
| 6 g/l | KNITTEX Katalysator MO |
| 10 g/l | der jeweiligen Dispersion der Komponente A1 und der Komponente B1 |
| 6 g/l | der (auch in den Beispielen 1-4 eingesetzten) Komponente D3 |

Die so erhaltenen Ausrüstungsflotten wurden bei Raumtemperatur mittels Foulard auf blaue Baumwollköper mit einer Flottenaufnahme von etwa 100 Gew.-%, bezogen auf das Warengewicht, aufgebracht. Die Gewebe wurden dann für 10 Minuten bei 110°C in einem Trockenschrank getrocknet und anschließend für 5 Minuten bei 150°C kondensiert. Die Gewebe wurden nach den Wäschen bzw. nach dem Chemisch-Reinigen gebügelt. Die in den Beispielen 33 bis 37 ausgerüsteten Baumwollgewebe weisen die in Tabelle 7 angeführten Testergebnisse auf.

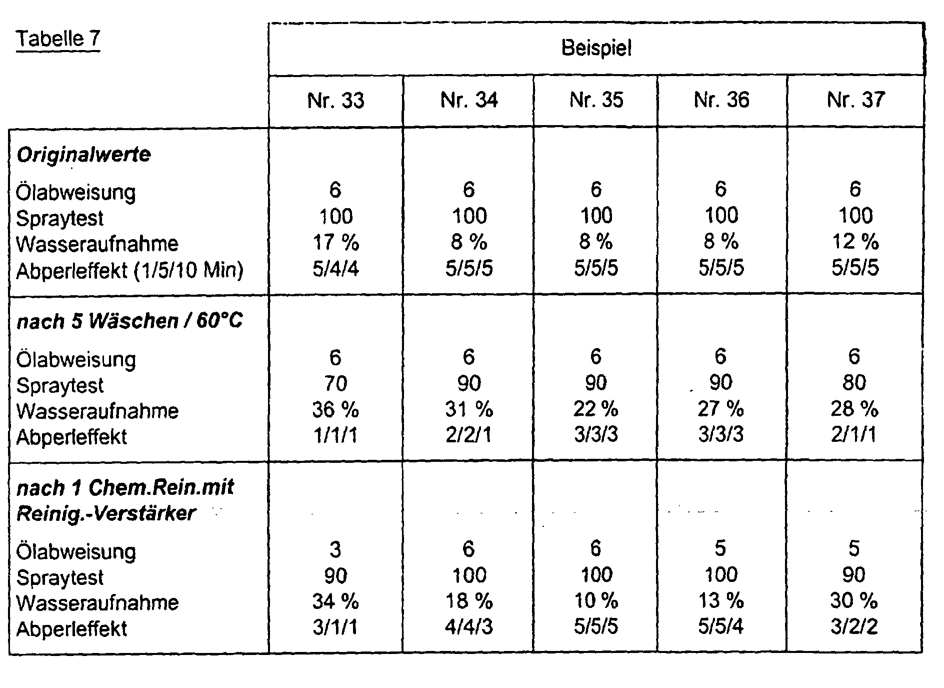

## Patentansprüche

1. Wäßrige Dispersion enthaltend mindestens drei Komponenten A), B) und C), wobei Komponente A) eine Verbindung ist, die zwei oder mehr blockierte Isocyanatgruppen im Molekül enthält, wobei Komponente C) ein Dispergator oder Dispergatorgemisch ist, **dadurch gekennzeichnet, daß** Komponente B) ein Produkt ist, das erhältlich ist durch Umsetzung einer Diepoxyverbindung der Formel (I)
G - O - (L - O)_{y} - G (I)
oder eines Gemisches von Verbindungen der Formel (I) mit einem Di- oder Polyamin der Formel (II)
H₂N-(CⱼH₂ⱼNH)_{z}-H (II)
oder einem Gemisch von Verbindungen der Formel (II) in einem solchen Mengenverhältnis, daß das molare Verhältnis der eingesetzten Glycidylreste G zu den H-Atomen der eingesetzten Aminogruppen im Bereich von 2 : 1 bis 1 : 4, vorzugsweise im Bereich von 1 : 1 bis 1 : 2, besonders bevorzugt im Bereich von 1 : 1 bis 1 : 1,1 liegt,
und anschließender Umsetzung des erhaltenen Reaktionsproduktes mit einer Säure in einem solchen Mengenverhältnis, daß das Verhältnis von Mol Stickstoff zu Äquivalenten Säure im Bereich von 1 : 0,25 bis 1 : 2 liegt,
wobei die angegebenen Reste und Indizes unabhängig voneinander folgendes bedeuten:
G = Glycidylrest (2,3-Epoxy-1-propylrest)
L = zweiwertiger Rest der Formel (CO)_{c¹} - E_{d} - (CO)_{c²}
E = zweiwertiger aromatischer, aliphatischer oder araliphatischer, gegebenenfalls durch ein oder mehrere O-Atome unterbrochener Kohlenwasserstoffrest mit 1-18 C-Atomen, vorzugsweise ein aliphatischer Rest mit 1-8 C-Atomen oder ein aromatischer Rest mit 6-24 C-Atomen
c¹ und c² sind unabhängig voneinander = 0 oder 1,
d = 0 oder 1
wobei c¹, c² und d nicht alle gleichzeitig gleich 0 sind, wenn y = 1
j = 0 oder 2-10
y = 0 oder 1
z = 1-3; jedoch für den Fall daß j = 0 ist z = 1.

2. Wäßrige Dispersion nach Anspruch 1, **dadurch gekennzeichnet, daß** die Isocyanatgruppen der Komponente A) mit einem Ketonoxim oder einem Gemisch von Ketonoximen, vorzugsweise mit Acetonoxim oder Butanonoxim, blockiert sind.

3. Wäßrige Dispersion nach Anspruch 1 oder 2, **dadurch gekennzeichnet, daß** c¹ und c² = 0 und y = 1.

4. Wäßrige Dispersion nach einem oder mehreren der Ansprüche 1 bis 3, **dadurch gekennzeichnet, daß** E ein aliphatischer Rest mit 2-6 C-Atomen oder ein aromatischer Rest mit 6-18 C-Atomen, vorzugsweise der Rest p - C₆H₄ - (CH₃)C(CH₃) - p - C₆H₄ - ist.

5. Wäßrige Dispersion nach einem oder mehreren der Ansprüche 1 bis 4, **dadurch gekennzeichnet, daß** z = 1 und j = 2-6, vorzugsweise j = 6.

6. Wäßrige Dispersion nach einem oder mehreren der Ansprüche 1 bis 5, **dadurch gekennzeichnet, daß** für die Umsetzung des Reaktionsprodukts aus einer Diepoxyverbindung der Formel (I) und aus einem Di- oder Polyamin der Formel (II) mit einer Säure eine organische Säure, vorzugsweise Essigsäure, oder eine starke anorganische Säure, vorzugsweise Salzsäure eingesetzt wird.

7. Wäßrige Dispersion nach einem oder mehreren der Ansprüche 1 bis 6, **dadurch gekennzeichnet, daß** die Dispersion erhältlich ist, indem die Komponenten A), B) und C) gemeinsam dispergiert werden und die dabei entstehende Dispersion vorzugsweise homogenisiert wird.

8. Wäßrige Dispersion nach einem oder mehreren der Ansprüche 1 bis 7, **dadurch gekennzeichnet, daß** die Dispersion die Komponenten A) und B) in einem Gewichtsverhältnis von 100 : 2,5 bis 100 : 30, vorzugsweise von 100 : 5 bis 100 : 15 enthält.

9. Wäßrige Dispersion nach einem oder mehreren der Ansprüche 1 bis 8, **dadurch gekennzeichnet, daß** die Dispersion mindestens einen nichtionischen, kationischen oder pseudokationischen Dispergator, vorzugsweise der Formel (III) oder (IV) enthält,
[R⁴ ₐR⁵ _{b}NR⁶ _{(4-a-b)}]ₚX (III)
R⁴R⁵N-CₖH₂ₖ-NR⁴ ₂ (IV)
wobei die angegebenen Reste und Indizes unabhängig voneinander folgendes bedeuten
R⁴ = (CₘH₂ₘO₎ₜ-R³
R³ = H oder lineare oder verzweigte Alkylgruppe mit 1-6 C-Atomen
R⁵ = linearer Alkyl- oder Alkenylrest mit 8-24 C-Atomen
R⁶ = H, Methyl oder Ethyl
a = 0, 1 oder 2
b = 1 oder 2
k = 2-6
m = 2-4
p = Wertigkeit von X
t = 1-20, vorzugsweise 5-10
X = Anion, vorzugsweise R¹COO⁻, CH₃SO₄⁻, SO₄²⁻,Halogenidion, besonders Cl⁻.

10. Wäßrige Dispersion nach einem oder mehreren der Ansprüche 1 bis 9, **dadurch gekennzeichnet, daß** die Dispersion die Komponenten A) und C) in einem Gewichtsverhältnis von 100 : 1 bis 100 : 20, vorzugsweise von 100 : 1 bis 100 : 5 enthält.

11. Wäßrige Dispersion nach einem oder mehreren der Ansprüche 1 bis 10, **dadurch gekennzeichnet, daß** zusätzlich als Komponente D) ein Perfluoralkylreste enthaltendes Oligomer, Homo- oder Copolymer, vorzugsweise auf Basis von Perfluoralkylreste enthaltendem (Meth)acrylat, enthalten ist.

12. Wäßrige Dispersion nach Anspruch 11, **dadurch gekennzeichnet, daß** als Komponente D) ein Perfluoralkylgruppen enthaltendes Copolymer enthalten ist, aufgebaut im wesentlichen aus einem Monomeren a):
a) 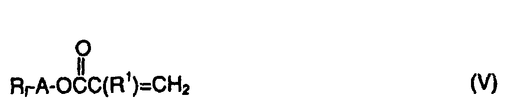 und einem oder mehr der Monomeren b) und c):
b) 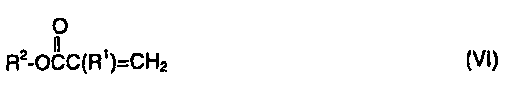
c) 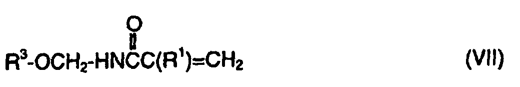
wobei die angegebenen Reste und Indizes unabhängig voneinander folgendes bedeuten
A = linearer oder verzweigter zweiwertiger Rest der Formel -CₙH₂ₙ-, -CₙH₂ₙ₋₂- oder -S(O₂)-NR³-CₘH₂ₘ- wobei das S-Atom an R_{f} gebunden ist
R_{f} = Perfluoralkylrest mit 4-20 C-Atomen
R¹ = H oder Methyl
R² = linearer Alkyl- oder Alkenylrest mit 1-24, vorzugsweise 4-24 C-Atomen
R³ = H oder vorzugsweise lineare oder verzweigte Alkylgruppe mit 1-6 C-Atomen
m = 2-4
n = 1-4.

13. Wäßrige Dispersion nach Anspruch 11 oder 12, **dadurch gekennzeichnet, daß** die Dispersion die Komponenten A) und D) in einem Gewichtsverhältnis von 100 : 40 bis 100 : 1500, vorzugsweise von 100 : 80 bis 100 : 250 enthält.

14. Verfahren zur Herstellung einer wäßrigen Dispersion gemäß einem oder mehreren der Ansprüche 1 bis 6 oder 9 bis 13, **dadurch gekennzeichnet, daß** die Komponenten A), B) und C) gemeinsam dispergiert und die dabei entstehende Dispersion vorzugsweise homogenisiert wird, wobei der Dispersion nach der Homogenisierung ggf. ein Perfluoralkylgruppen enthaltendes Oligomer, Homo- oder Copolymer (Komponente D)), vorzugsweise als wäßrige Dispersion, zugesetzt wird.

15. Verwendung einer wäßrigen Dispersion gemäß einem oder mehreren der Ansprüche 1 bis 13 für die Behandlung von Fasermaterialien, vorzugsweise von gewebten oder gewirkten textilen Flächengebilden.

16. Verwendung nach Anspruch 15, **dadurch gekennzeichnet, daß** die Fasermaterialien aus nativer oder regenerierter Cellulose, vorzugsweise Baumwolle, Fasern tierischen Ursprungs, vorzugsweise Wolle, synthetischen organischen Fasern oder aus Gemischen davon bestehen.

## Claims

1. An aqueous dispersion comprising at least three components A), B) and C), component A) being a compound containing two or more blocked isocyanate groups in the molecule, component C) being a dispersant or a mixture of dispersants, wherein component B) is a product obtainable by reacting a diepoxy compound of the formula (I)
G - O - (L - O)_{y} - G (I)
or a mixture of compounds of the formula (I) with a diamine or polyamine of the formula (II)
H₂N-(CⱼH₂ⱼNH)_{z}-H (II)
or a mixture of compounds of the formula (II) in a proportion such that the molar ratio of the deployed glycidyl radicals G to the hydrogen atoms of the deployed amino groups is in the range from 2:1 to 1:4, preferably in the range from 1:1 to 1:2, with particular preference in the range from 1:1 to 1:1.1,
and subsequently reacting the resulting reaction product with an acid in a proportion such that the ratio of moles of nitrogen to equivalents of acid is in the range from 1:0.25 to 1:2,
the above radicals and indices independently of one another having the following definitions:
G = glycidyl radical (2,3-epoxy-1-propyl radical)
L = divalent radical of formula (CO)_{c¹}-E_{d}-(CO)_{c²}
E = divalent aromatic, aliphatic or araliphatic hydrocarbon radical of 1-18 carbon atoms optionally interrupted by one or more oxygen atoms, preferably an aliphatic radical of 1-8 carbon atoms or an aromatic radical of 6-24 carbon atoms
c¹ and c² independently of one another = 0 or 1 d = 0 or 1
and c¹, c² and d are not all simultaneously 0 when
y = 1
j = 0 or 2-10
y = 0 or 1
z = 1-3; but z = 1 if j = 0.

2. An aqueous dispersion according to claim 1, wherein the isocyanate groups of component A) have been blocked with a ketone oxime or mixture of ketone oximes, preferably with acetone oxime or butanone oxime.

3. An aqueous dispersion according to claim 1 or 2, wherein c¹ and c² = 0 and y = 1.

4. An aqueous dispersion according to one or more of claims 1 to 3, wherein E is an aliphatic radical of 2-6 carbon atoms or an aromatic radical of 6-18 carbon atoms, preferably the radical p-C₆H₄-(CH₃)C(CH₃)-p-C₆H₄-.

5. An aqueous dispersion according to one or more of claims 1 to 4, wherein z = 1 and j = 2-6, preferably j = 6.

6. An aqueous dispersion according to one or more of claims 1 to 5, wherein the acid used for the reaction of the reaction product of a diepoxy compound of the formula (I) and of a diamine or polyamine of the formula (II) with an acid is an organic acid, preferably acetic acid, or a strong inorganic acid, preferably hydrochloric acid.

7. An aqueous dispersion according to one or more of claims 1 to 6, wherein the dispersion is obtainable by jointly dispersing components A), B) and C) and, preferably, homogenizing the resulting dispersion.

8. An aqueous dispersion according to one or more of claims 1 to 7, wherein the dispersion comprises components A) and B) in a weight ratio of from 100:2.5 to 100:30, preferably from 100:5 to 100:15.

9. An aqueous dispersion according to one or more of claims 1 to 8, wherein the dispersion comprises at least one nonionic, cationic or pseudocationic dispersant, preferably of the formula (III) or (IV)
[R⁴ ₐR⁵ _{b}NR⁶ _{(4-a-b)}]ₚX (III)
R⁴R⁵N-CₖH₂ₖ-NR⁴ ₂ (IV)
where the radicals and indices indicated have independently of one another the following definitions:
R⁴ = (CₘH₂ₘO)ₜ-R³
R³ = hydrogen or linear or branched alkyl group of 1-6 carbon atoms
R⁵ = linear alkyl or alkenyl radical of 8-24 carbon atoms
R⁶ = hydrogen, methyl or ethyl
a = 0, 1 or 2
b = 1 or 2
k = 2-6
m = 2-4
p = valence of X
t = 1-20, preferably 5-10
X = anion, preferably R¹COO⁻, CH₃SO₄⁻, SO₄²⁻, halide ion, especially Cl⁻.

10. An aqueous dispersion according to one or more of claims 1 to 9, wherein the dispersion comprises components A) and C) in a weight ratio of from 100:1 to 100:20, preferably from 100:1 to 100:5.

11. An aqueous dispersion according to one or more of claims 1 to 10, further comprising an oligomer, homopolymer or copolymer containing perfluoroalkyl radicals, preferably based on a (meth)acrylate containing perfluoroalkyl radicals, as component D).

12. An aqueous dispersion according to claim 11,
wherein the copolymer containing perfluoroalkyl radicals present as component D) is composed essentially of a monomer a):
a) 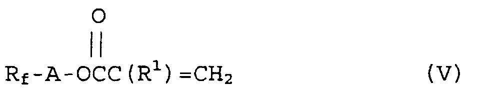 and one or more of the monomers b) and c) :
b) 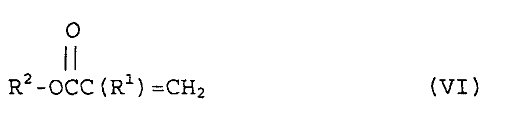
c) 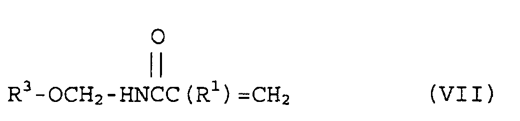
where the radicals and indices indicated have independently of one another the following definitions:
A = linear or branched divalent radical of the formula -CₙH₂ₙ-, -CₙH₂ₙ₋₂- or -S(O₂)-NR³-CₘH₂ₘ-, the sulfur atom being attached to R_{f}
R_{f} = perfluoroalkyl radical of 4-20 carbon atoms
R¹ = hydrogen or methyl
R² = linear alkyl or alkenyl radical of 1-24, preferably 4-24, carbon atoms
R³ = hydrogen or, preferably, linear or branched alkyl group of 1-6 carbon atoms
m = 2-4
n = 1-4.

13. An aqueous dispersion according to claim 11 or 12, wherein the dispersion comprises components A) and D) in a weight ratio of 100:40 to 100:1500, preferably from 100:80 to 100:250.

14. A process for preparing an aqueous dispersion according to one or more of claims 1 to 6 or 9 to 13, which comprises jointly dispersing components A), B) and C) and, preferably, homogenizing the resulting dispersion and after the homogenization optionally adding to the dispersion an oligomer, homopolymer or copolymer containing perfluoroalkyl radicals (component D)), preferably in the form of an aqueous dispersion.

15. The use of an aqueous dispersion according to one or more of claims 1 to 13 to treat fibre materials, preferably woven or knitted textile sheetlike structures.

16. The use according to claim 15, wherein the fibre materials comprise natural or regenerated cellulose, preferably cotton, fibers of animal origin, preferably wool, synthetic organic fibers, or mixtures thereof.

## Revendications

1. Dispersion aqueuse contenant au moins trois composants A), B) et C), dans laquelle le composant A) est un composé qui contient deux groupes isocyanate ou plus bloqués dans la molécule, le composant C) est un dispersant ou un mélange de dispersants, **caractérisé en ce que** le composant B) est un produit que l'on peut obtenir en faisant réagir un composé diépoxy de formule (I)
G-O-(L-O)_{y}-G (I)
ou un mélange de composés de formule (I), avec une diamine ou une polyamine de formule (II)
H₂N-(CⱼH₂ⱼNH)_{z}-H (II)
ou avec un mélange de composés de formule (II), dans un rapport quantitatif tel, que le rapport molaire des groupes glycidyle G mis en oeuvre aux atomes d'hydrogène des groupes amino mis en oeuvre se situe dans la gamme de 2:1 à 1:4, de préférence dans la gamme de 1:1 à 1:2, de manière plus particulièrement préférée dans la gamme de 1:1 à 1:1,1,
et en faisant ensuite réagir le produit réactionnel obtenu avec un acide, dans un rapport quantitatif tel, que le rapport d'atome-gramme d'azote aux équivalents acides se situe dans la gamme de 1:0,25 à 1:2,
où les groupes et les indices indiqués ont, indépendamment les uns des autres, les significations suivantes :
G représente un groupe glycidyle (groupe 2,3-époxy-1-propyle)
L représente un groupe bivalent de formule
(CO)_{c¹}-E_{d}-(CO)_{c²}
E représente un groupe hydrocarboné bivalent aromatique, aliphatique ou araliphatique possédant 1 à 18 atomes de C, éventuellement interrompu par un ou plusieurs atomes d'oxygène, de préférence un groupe aliphatique possédant 1 à 8 atomes de C ou un groupe aromatique possédant 6 à 24 atomes de C,
c¹ et c² valent, indépendamment l'un de l'autre, 0 ou 1,
d vaut 0 ou 1
c¹ et c² et d ne valant pas 0 en même temps si y vaut 1
j vaut 0 ou 2 à 10
y vaut 0 ou 1
z vaut 1 à 3 ; toutefois, dans le cas où j vaut 0, z vaut 1.

2. Dispersion aqueuse selon la revendication 1, **caractérisée en ce que** les groupes isocyanate du composant A) sont bloqués par une cétoxime ou un mélange de cétoximes, de préférence acétoxime ou butanoxime.

3. Dispersion aqueuse selon la revendication 1 ou 2, **caractérisée en ce que** c¹ et c² valent 0 et y vaut 1.

4. Dispersion aqueuse selon l'une quelconque ou plusieurs des revendications 1 à 3, **caractérisée en ce que** E représente un groupe aliphatique possédant 2 à 6 atomes de C ou un groupe aromatique possédant 6 à 18 atomes de C, de préférence le groupe p-C₆H₄-(CH₃)C(CH₃)-p-C₆H₄-.

5. Dispersion aqueuse selon l'une quelconque ou plusieurs des revendications 1 à 4, **caractérisée en ce que** z vaut 1 et j vaut 2 à 6, de préférence j vaut 6.

6. Dispersion aqueuse selon l'une quelconque ou plusieurs des revendications 1 à 5, **caractérisée en ce que** l'on met en oeuvre, pour la réaction du produit réactionnel, formé d'un composé diépoxy de formule (I) et d'une diamine ou d'une polyamine de formule (II), avec un acide, un acide organique, de préférence l'acide acétique, ou un acide inorganique fort, de préférence l'acide chlorhydrique.

7. Dispersion aqueuse selon l'une quelconque ou plusieurs des revendications 1 à 6, **caractérisée en ce que** l'on peut obtenir la dispersion en dispersant conjointement les composants A), B) et C) et en homogénéisant de préférence la dispersion ainsi formée.

8. Dispersion aqueuse selon l'une quelconque ou plusieurs des revendications 1 à 7, **caractérisée en ce que** la dispersion contient les composants A) et B) dans un rapport pondéral de 100:2,5 à 100:30, de préférence de 100:5 à 100:15.

9. Dispersion aqueuse selon l'une quelconque ou plusieurs des revendications 1 à 8, **caractérisée en ce que** la dispersion contient au moins un dispersant non ionique, cationique ou pseudo-cationique, de préférence de formule (III) ou (IV)
[R⁴ ₐR⁵ _{b} NR⁶ _{(4-a-b)}]ₚX (III)
R⁴R⁵N-CₖH₂ₖ-NR⁴ ₂ (IV)
dans lesquelles les groupes et les indices indiqués ont, indépendamment les uns des autres, les significations suivantes :
R⁴ représente (CₘH₂ₘO)ₜ-R³
R³ représente un atome d'hydrogène ou un groupe alkyle linéaire ou ramifié possédant 1 à 6 atomes de C
R⁵ représente un groupe alkyle ou alcényle linéaire possédant 8 à 24 atomes de C
R⁶ représente un atome d'hydrogène, un groupe méthyle ou éthyle
a vaut 0, 1 ou 2
b vaut 1 ou 2
k vaut 2 à 6
m vaut 2 à 4
p représente la valence de X
t vaut 1 à 20, de préférence 5 à 10
X représente un anion, de préférence R¹COO⁻, CH₃SO₄⁻, SO₄²⁻, un ion halogénure, en particulier Cl⁻.

10. Dispersion aqueuse selon l'une quelconque ou plusieurs des revendications 1 à 9, **caractérisée en ce que** la dispersion contient les composants A) et C) dans un rapport pondéral de 100:1 à 100:20, de préférence de 100:1 à 100:5.

11. Dispersion aqueuse selon l'une quelconque ou plusieurs des revendications 1 à 10, **caractérisée en ce qu'**elle contient en plus, en tant que composant D), un oligomère, un homo- ou un co-polymère contenant des groupes perfluoroalkyle, de préférence à base de (méth)acrylate contenant des groupes perfluoroalkyle.

12. Dispersion aqueuse selon la revendication 11, **caractérisée en ce qu'**elle contient, en tant que composant D), un copolymère contenant des groupes perfluoroalkyle, qui est formé principalement d'un monomère a) :
a) 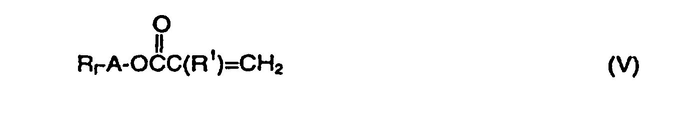 et d'un ou de plusieurs monomères b) et c) :
b) 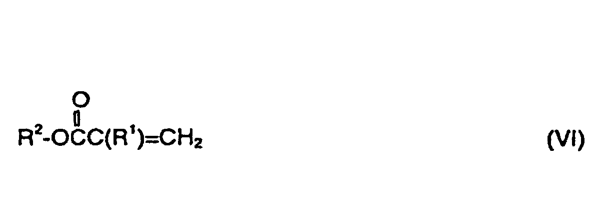
c) 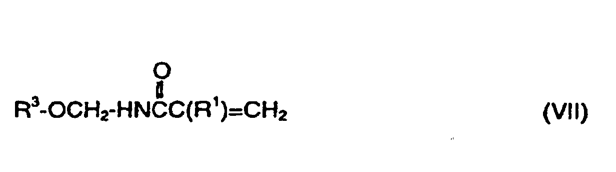
dans lesquels les groupes et les indices indiqués ont, indépendamment les uns des autres, les significations suivantes :
A représente un groupe bivalent linéaire ou ramifié de formule -CₙH₂ₙ-, -CₙH₂ₙ₋₂- ou -S(O₂)NR³-CₘH₂ₘ-, où l'atome de S est lié à R_{f}
R_{f} représente un groupe perfluoroalkyle possédant 4 à 20 atomes de C
R¹ représente un atome d'hydrogène ou un groupe méthyle
R² représente un groupe alkyle ou alcényle linéaire possédant 1 à 24 atomes de C, de préférence 4 à 24 atomes de C
R³ représente un atome d'hydrogène ou de préférence un groupe aklyle linéaire ou ramifié possédant 1 à 6 atomes de C
m vaut 2 à 4
n vaut 1 à 4.

13. Dispersion aqueuse selon la revendication 11 ou 12, **caractérisée en ce que** la dispersion contient les composants A) et D) dans un rapport pondéral de 100:40 à 100:1500, de préférence de 100:80 à 100:250.

14. Procédé de production d'une dispersion aqueuse selon l'une quelconque ou plusieurs des revendications 1 à 6 ou 9 à 13, **caractérisé en ce que** l'on disperse conjointement les composants A), B) et C) et que l'on homogénéise de préférence la dispersion ainsi formée, en ajoutant éventuellement après l'homogénéisation un oligomère, un homo- ou un co-polymère (composant D)) contenant des groupes perfluoroalkyle, de préférence sous forme de dispersion aqueuse, à la dispersion.

15. Utilisation d'une dispersion aqueuse selon l'une quelconque ou plusieurs des revendications 1 à 13 pour le traitement de matières fibreuses, de préférence de surfaces textiles tissées ou tricotées.

16. Utilisation selon la revendication 15, **caractérisée en ce que** les matières fibreuses sont composées de cellulose native ou régénérée, de préférence de coton, de fibres d'origine animale, de préférence de laine, de fibres organiques synthétiques ou de mélanges de ceux-ci.
